(19) Europäisches Patentamt
European Patent Office
Office européen des brevets

(11) Veröffentlichungsnummer: **0 165 447**
**B1**

(12) # EUROPÄISCHE PATENTSCHRIFT

(45) Veröffentlichungstag der Patentschrift: **12.04.89**

(51) Int. Cl.⁴: **C 09 D 7/04**, C 09 D 3/64

(21) Anmeldenummer: **85105765.3**

(22) Anmeldetag: **10.05.85**

(54) **Alpha-Hydroxyketone als Hautverhinderungsmittel.**

(30) Priorität: **22.05.84 DE 3418988**

(43) Veröffentlichungstag der Anmeldung:
**27.12.85 Patentblatt 85/52**

(45) Bekanntmachung des Hinweises auf die Patenterteilung:
**12.04.89 Patentblatt 89/15**

(84) Benannte Vertragsstaaten:
**AT BE CH DE FR GB LI NL SE**

(56) Entgegenhaltungen:
**FR-A- 2 096 223**
**FR-A- 2 146 487**
**GB-A- 2 093 472**

(73) Patentinhaber: **BASF Aktiengesellschaft,**
**Carl-Bosch-Strasse 38, D-6700 Ludwigshafen (DE)**

(72) Erfinder: **Weiss, Wolfram, Dr., Am Speyerweg 40,**
**D-6704 Mutterstadt (DE)**
Erfinder: **Balzer, Wolf-Dieter, Dr., Bruesseler Ring 34,**
**D-6700 Ludwigshafen (DE)**
Erfinder: **Fikentscher, Rolf, Dr., Von-Stephan-Strasse 27,**
**D-6700 Ludwigshafen (DE)**
Erfinder: **Immel, Guenther, Dr., Mozartstrasse 28,**
**D-6940 Weinheim (DE)**
Erfinder: **Wolf, Hans, Dr., Dubliner Strasse 1,**
**D-6700 Ludwigshafen (DE)**

**EP 0 165 447 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft die Verwendung von aliphatischen α-Hydroxyketonen als Hautverhinderungsmittel in lufttrocknenden Beschichtungsmaterialien, insbesondere in Lacken und Farben auf Basis oxidativ trocknender Alkydharze.

Lufttrocknende bzw. oxidativ trocknende Lacke enthalten Filmbildner, die unter Einwirkung des Luftsauerstoffs in den festen Zustand übergehen. Derartige Lacke sind beispielsweise in H. Kittel, «Lehrbuch der Lacke und Beschichtungen», Bd. III, 1976, S. 261 ff; in Glasurit Handbuch, «Lakke und Farben», 10. Auflage, 1969; von W.O. Lundberg, in «Antioxidation und Antioxidants», Vol. II, Interscience Publishers, New York, London 1962; sowie von W. Kurze in Ullmanns Enzyklopädie der technischen Chemie, 4. Aufl., Bd. 8, 1974 beschrieben.

Zu diesen Filmbildnern zählt man die sogenannten trocknenden Öle und insbesondere Alkydharze, die sich von trocknenden Fettsäuren, natürlichen und auch synthetischen, ableiten, z.B. von Leinöl, Sojaöl und Ricinenöl.

Zur Beschleunigung der oxidativen Trocknung werden den Beschichtungssystemen Sikkative zugesetzt. Es handelt sich dabei im allgemeinen um Metallseifen, z.B. Octoate oder Naphthenate von u.a. Cobalt, Mangan und Blei.

Die oxidative Trocknung findet nicht nur im Lackfilm statt, sie kann auch schon im flüssigen Lack während dessen Aufbewahrung stattfinden. In diesem Falle erfolgt der Übergang in den festen Zustand dort verstärkt, wo der Sauerstoff einwirken kann, nämlich an der Oberfläche. Dabei bildet sich eine mehr oder weniger dicke Haut, die die Verwendung des Lackes beeinträchtigen kann und somit unerwünscht ist.

Zur Verminderung der Hautbildung werden den oxidativ trocknenden Beschichtungsmaterialien oxidationshemmende Mittel zugesetzt, die in der oben angeführten einschlägigen Literatur als «Hautverhinderungsmittel» bezeichnet werden. Wirksam sind hierbei

a) Antioxidantien auf Basis von Phenolen und aromatischen Aminen (vgl. die oben angeführte Literaturstelle von W. Kurze in Ullmanns Enzyklopädie der technischen Chemie) und

b) Oxime (vgl. das oben angeführte Lehrbuch von H. Kittel und die Publikation von M. Giesen, FATIPEC-Kongressbuch 1964, Seiten 349 bis 353) sowie Hydroxylamine (vgl. DE-OS 1 519 103).

Die unter a) genannten Verbindungen sind schwerflüchtig und verlängern die Trocknungsdauer der Lacke. Bei den unter b) genannten flüchtigen Hautverhinderungsmitteln haben sich insbesondere Methylethylketoxim und Butyraldoxim als wirksam erwiesen. In der Praxis werden diese Produkte meist in Mischung mit anderen Antioxidantien eingesetzt.

Bei den oben angeführten Verbindungsklassen handelt es sich um Produkte, die den heutigen Anforderungen an umweltfreundliche Lacksysteme nicht mehr genügen. So ist z.B. Butyraldoxim als giftig einzustufen. Daneben tragen sie zur Verfärbung der Lacke bei.

Es wurde nun gefunden, dass man die Hautbildung bei Lagerung von Lösungen, welche oxidativ trocknende Filmbildner enthalten, insbesondere von Alkydharzen, verhindern kann, wenn man α-Hydroxyketone als Hautverhinderungsmittel verwendet.

Gegenstand der vorliegenden Erfindung ist die Verwendung aliphatischer α-Hydroxyketone der allgemeinen Formel

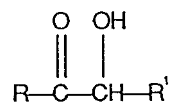

,

in der R Kohlenwasserstoffreste mit 1 bis 4 Kohlenstoffatomen und $R^1$ Wasserstoff der Kohlenwasserstoffreste mit 1 bis 4 Kohlenwasserstoffatomen bedeuten, in Mengen von 0,01 bis 2 Gew.-% als Hautverhinderungsmittel in Beschichtungsmaterialien, die oxidativ trocknende Filmbildner enthalten, insbesondere in Farben und Lacken, die Alkydharze enthalten.

Die α-Hydroxyketone werden im allgemeinen in Mengen von 0,01 bis 2, vorzugsweise 0,05 bis 1 Gew.-%, bezogen auf den gesamten Lack, eingesetzt, und können auch in Kombination mit anderen Hautverhinderungsmitteln oder Antioxidantien eingesetzt werden.

Ähnlich den niedermolekularen Oximen verflüchtigen sich die aliphatischen α-Hydroxyketone infolge ihres hohen Dampfdruckes relativ rasch aus dem Lackfilm, so dass keine Trocknungsverzögerung auftritt. Gegenüber den Oximen besitzen sie jedoch den Vorteil, dass sie nicht zur Verfärbung des Lackes beitragen und als toxikologisch unbedenklich eingestuft werden.

α-Hydroxyketone sind literaturbekannte Stoffe. In der oben angegebenen Formel können R und $R^1$ für Kohlenwasserstoffreste mit 1 bis 4 Kohlenstoffatomen, insbesondere gesättigte Kohlenwasserstoffreste mit 1 bis 4 Kohlenstoffatomen, wie $-CH_3$, $-C_2H_5$, $-C_3H_7$ und $-C_4H_9$ und im Falle $R^1$ auch noch für Wasserstoff stehen. Die Herstellung von α-Hydroxyketonen, die nicht Gegenstand der vorliegenden Patentanmeldung ist, kann z.B. durch partielle Oxidation von 1,2-Diolen erfolgen. Die Produkte können hierbei auch ohne vorangegangene destillative Reinigung im Gemisch mit ihren Ausgangsverbindungen als Hautverhinderungsmittel eingesetzt werden.

Die hautverhindernde Wirkung nimmt – ähnlich wie in der Reihe der Ketoxime – mit steigendem Molgewicht ab. Das Anfangsglied der Reihe, Hydroxyaceton ($R = CH_3$, $R^1 = H$), hat die höchste Wirksamkeit.

Die zur Erzielung guter Hautverhütungseffekte erforderlichen Zusatzmengen sind gering und liegen, je nach Neigung des verwendeten Lackes zur Hautbildung und der Konstitution des eingesetzten Mittels zwischen 0,01 und 2, vorzugsweise zwischen 0,05 und 1 Gew.-%, bezogen auf den gesamten Lack. Die Kombination mit anderen Hautverhinderungsmitteln und/oder Antioxidantien ist möglich.

Die Einarbeitung der α-Hydroxyketone in die Beschichtungsmaterialien erfolgt nach üblichen Methoden, beispielsweise durch Einrühren des flüssigen α-Hydroxyketons oder dessen Lösung in einem lacküblichen Lacklösemittel.

Die in den Beispielen genannten Teile und Prozente sind Gewichtsteile bzw. Gewichtsprozente.

Beispiele 1 bis 4

Ein handelsüblicher Klarlack, der sich wie folgt zusammensetzt:
100 Teile eines handelsüblichen Synthetischfettsäurealkydharzes für lufttrocknende Industrielacke (z.B. ®Alkydal F 46 (55%ig)),
3,3 Teile Kobalt-Blei-Mangan-Octoat (enthalten 11% Pb, 0,75% Co, 0,75% Mn), 50%ig in Xylol wird
in Beispiel 1 mit 0,08 Teilen Hydroxyaceton (Rohware, 67%ig in Propylenglykol),
in Beispiel 2 mit 0,08 Teilen Hydroxyaceton (destilliert),
in Beispiel 3 mit 0,2 Teilen einer Mischung aus 30 Teilen Hydroxyaceton, 20 Teilen Triphenylphosphin, 25 Teilen n-Butanol und 25 Teilen Xylol (im folgenden als «Mischung A» bezeichnet),
in Beispiel 4 mit 0,08 Teilen Hydroxybutanon
versetzt. Zum Vergleich werden dem oben angeführten Lack handelsübliche Hautverhinderungsmittel zugesetzt.

Zusatz von:
in Vergleich 1: 0,08 Teilen Butyraldoxim,
in Vergleich 2: 0,08 Teilen Methylethylketoxim,
in Vergleich 3: 0,08 Teilen ®Kerobit TBK (= substituiertes Phenol),
in Vergleich 4: 0,08 Teilen ®Kerobit BHT (= substituiertes Phenol).

100 g der so bereiteten Proben werden in ein 250 ml Glasgefäss mit Schraubdeckel gefüllt. Die so gefüllten Gefässe werden verschlossen, bei 23°C aufbewahrt und in bestimmten Zeitabständen auf Hautbildung untersucht. Die Ergebnisse sind aus nachstehender Tabelle 1 ersichtlich.

Tabelle 1 (Hautbildung)

| Prüflack | Hautbildung nach Tagen* | | | | | |
|---|---|---|---|---|---|---|
| | 3 | 7 | 14 | 21 | 28 | 35 |
| Beispiel 1 | 0 | 0 | 0 | 1 | 3 | 4 |
| Beispiel 2 | 0 | 0 | 0 | 1 | 2 | 3 |
| Beispiel 3 | 0 | 0 | 0 | 1 | 3 | 4 |
| Beispiel 4 | 0 | 0 | 1 | 2 | 3 | 4 |
| Vergleich 1 | 0 | 0 | 0 | 2 | 3 | 4 |
| Vergleich 2 | 0 | 0 | 0 | 2 | 3 | 4 |
| Vergleich 3 | 0 | 0 | 0 | 1 | 3 | 4 |
| Vergleich 4 | 0 | 0 | 0 | 1 | 2 | 3 |
| ohne Hautverhinderungsmittel | 1 | 2 | 2 | 3 | 4 | 4 |

* 0 = keine Hautbildung
1 = Hautansatz an der Glaswand
2 = dünne Haut
3 = dicke Haut
4 = Lack geliert

Die Prüfergebnisse aus Tabelle 1 zeigen, dass die eingesetzten α-Hydroxyketone sowohl als Rohprodukt sowie als Reinprodukt und in Mischung mit einem anders gearteten Antioxidans, wie Triphenylphosphin die hautverhindernde Wirkung von Produkten, die dem Stand der Technik entsprechen, erreicht. Lediglich das gegenüber Hydroxyaceton höhere Homologe Hydroxybutanon fällt mit dem höheren Molekulargewicht etwas zurück.

Die nachstehend aufgeführte Tabelle 2 gibt das Trocknungsverhalten der entsprechenden Lacke wieder. Die Lacke wurden jeweils nach 7 bzw. 21 Tagen Lagerzeit auf Glasplatten appliziert und jeweils die Zeit für die Oberflächentrocknung und die Durchtrocknung des Lackes ermittelt.

Tabelle 2 (Filmprüfung)

| Lack | nach 7 Tagen Lagerung | nach 21 Tagen Lagerung | nach 7 Tagen Lagerung | nach 21 Tagen Lagerung |
|---|---|---|---|---|
| | Oberflächen trocken | | durchgetrocknet | |
| Beispiel 1 | nach 19 Stunden | nach 17 Stunden | nach 21 Stunden | nach 19 Stunden |
| Beispiel 2 | nach 18 Stunden | nach 15 Stunden | nach 20 Stunden | nach 17 Stunden |
| Beispiel 3 | nach 22 Stunden | nach 19 Stunden | nach 24 Stunden | nach 20 Stunden |
| Beispiel 4 | nach 21 Stunden | nach 18 Stunden | nach 23 Stunden | nach 20 Stunden |
| Vergleich 1 | nach 22 Stunden | nach 20 Stunden | nach 24 Stunden | nach 20 Stunden |
| Vergleich 2 | nach 22 Stunden | nach 19 Stunden | nach 23 Stunden | nach 21 Stunden |
| Vergleich 3 | > 24 Stunden | > 23 Stunden | > 24 Stunden | > 24 Stunden |
| Vergleich 4 | > 24 Stunden | > 24 Stunden | > 24 Stunden | > 24 Stunden |
| ohne Hautverhinderungsmittel | nach 18 Stunden | nach 15 Stunden | nach 20 Stunden | nach 17 Stunden |

Die Vergleiche 3 und 4 machen die Trocknungsverzögerung von Hautverhinderungsmitteln auf Phenolbasis deutlich. Die erfindungsgemässen Produkte in Beispiel 1 bis 4 verhalten sich wie die flüchtigen Oxime aus Vergleich 1 und 2, wobei die Trocknungsverzögerung noch etwas geringer ist.

Tabelle 3 (Verfärbung)

| Prüflack | Iodfarbzahl des 4 Wochen alten Lackes |
|---|---|
| Beispiel 1 | 20 |
| Beispiel 2 | 20 |
| Beispiel 3 | 20 |
| Beispiel 4 | 20 |
| Vergleich 1 | 50 |
| Vergleich 2 | 50 |
| Vergleich 3 | 35 |
| Vergleich 4 | 40 |
| ohne Hautverhinderungsmittel | 20 |

Aus Tabelle 3 ist zu entnehmen, dass der Zusatz der erfindungsgemässen Hautverhinderungsmittel gegenüber Vergleich 1 bis 4 keinen Beitrag zur Verfärbung der Lacke liefert.

Beispiele 5 bis 7

Klarlacke, analog zu den Beispielen 1 bis 4 hergestellt, werden
in Beispiel 5 mit 0,25 Teilen Hydroxyaceton,
in Beispiel 6 mit 0,04 Teilen Hydroxyaceton,
in Beispiel 7 mit 0,25 Teilen Hydroxybutanon,
in Vergleich 5 mit 0,25 Teilen Methylethylketoxim,
in Vergleich 6 mit 0,04 Teilen Methylethylketoxim
versetzt und analog zu den Beispielen 1 bis 4 beurteilt.

Tabelle 4 (Hautbildung)

| Prüflack | Hautbildung nach Tagen (siehe Tabelle 1) | | | | | |
|---|---|---|---|---|---|---|
| | 3 | 7 | 14 | 21 | 28 | 35 |
| Beispiel 5 | 0 | 0 | 0 | 1 | 2 | 2 |
| Beispiel 6 | 0 | 0 | 1 | 2 | 3 | 4 |
| Beispiel 7 | 0 | 0 | 0 | 1 | 2 | 2 |
| Vergleich 5 | 0 | 0 | 0 | 0 | 0 | 2 |
| Vergleich 6 | 0 | 0 | 2 | 3 | 4 | 4 |
| ohne Hautverhinderungsmittel | 1 | 2 | 2 | 3 | 4 | 4 |

Tabelle 5 (Filmprüfung)

| Lack | nach 7 Tagen Lagerung | nach 21 Tagen Lagerung | nach 7 Tagen Lagerung | nach 21 Tagen Lagerung |
|---|---|---|---|---|
| | Oberflächen trocken | | durchgetrocknet | |
| Beispiel 5 | nach 19 Stunden | nach 17 Stunden | nach 22 Stunden | nach 20 Stunden |
| Beispiel 6 | nach 17 Stunden | nach 14 Stunden | nach 19 Stunden | nach 17 Stunden |
| Beispiel 7 | nach 20 Stunden | nach 18 Stunden | nach 24 Stunden | nach 21 Stunden |
| Vergleich 5 | nach 19 Stunden | nach 18 Stunden | > 24 Stunden | nach 21 Stunden |
| Vergleich 6 | nach 17 Stunden | nach 15 Stunden | nach 20 Stunden | nach 17 Stunden |
| ohne Hautverhinderungsmittel | nach 18 Stunden | nach 15 Stunden | nach 20 Stunden | nach 17 Stunden |

Tabelle 6 (Verfärbung)

| Prüflack | Iodzahl des 4 Wochen alten Lackes |
|---|---|
| Beispiel 5 | 20 |
| Beispiel 6 | 20 |
| Beispiel 7 | 20 |
| Vergleich 5 | 60 |
| Vergleich 6 | 30 |
| ohne Hautverhinderungsmittel | 20 |

In den Tabellen 4 bis 6 ist der Einfluss unterschiedlicher Mengen an erfindungsgemässen Zusätzen im Vergleich zum Stand der Technik aufgezeigt.

Beispiele 8 bis 10

Analog zu den Beispielen 1 bis 4 werden Lacke auf Basis eines handelsüblichen Syntetischfettsäurealkydharzes für lufttrocknende Industrielacke (z.B. Alkydal F 46, 55%ig) hergestellt und dabei die Sikkativmenge durch Verwenden von 3,3 Teilen Kobalt-Blei-Mangan-Octoat (11% Pb, 0,75% Co, 0,75% Mn), unverdünnt, verdoppelt. Diese Lacke werden

in Beispiel 8 mit 0,1% Hydroxyaceton,
in Beispiel 9 mit 0,2% Hydroxyaceton,
in Beispiel 10 mit 0,4% Hydroxyaceton,
versetzt und wie bei Beispiel 1 bis 4 hinsichtlich Hautbildung geprüft.

Tabelle 7 (Hautbildung)

| Prüflack | Hautbildung nach Tagen (siehe Tabelle 1) | | | | | |
|---|---|---|---|---|---|---|
| | 3 | 7 | 14 | 21 | 28 | 35 |
| Beispiel 8 | 1 | 2 | 3 | 4 | 4 | 4 |
| Beispiel 9 | 0 | 1 | 2 | 3 | 4 | 4 |
| Beispiel 10 | 0 | 0 | 0 | 1 | 1 | 1 |
| ohne Zusatz | 2 | 3 | 4 | 4 | 4 | 4 |

Die Beispiele 8 bis 10 zeigen, dass auch bei hoher Sikkativmenge die hautverhindernde Wirkung der α-Hydroxyketone bestehen bleibt.

In den folgenden Beispielen wird die Wirkung der Hautverhinderungsmittel in Klarlacken auf Basis unterschiedlicher, oxidativ trocknender Alkydharze aufgezeigt. Dabei wird als erfindungsgemässer Zusatz die in Beispiel 3 beschriebene Mischung A aus
30 Teilen Hydroxyaceton
20 Teilen Triphenylphosphin
25 Teilen Xylol und
25 Teilen n-Butanol
verwendet.

Beispiel 11 und 12

100 Teile eines handelsüblichen mittelöligen Leinölalkydharzes (z.B. Alkydal L 49, 55%ig) und 0,5 Teile Kobalt-Blei-Mangan-Octoat (11% Pb, 0,75% Co, 0,75% Mn), unverdünnt, werden,
in Beispiel 11 mit 0,2 Teilen Mischung A,
in Beispiel 12 mit 0,5 Teilen Mischung A,
in Vergleich 7 mit 0,2 Teilen Methylethylketoxim,
in Vergleich 8 mit 0,5 Teilen Methylethylketoxim
versetzt und analog zu den oben angeführten Beispielen beurteilt (siehe Tabellen 8 und 9).

Beispiele 13 und 14

100 Teile eines kurzöligen Ricinenalkydharzes (z.B. ®Alftalat AR 300, 55%ig), 2 Teile Kobalt-Blei-Mangan-Octoat (11% Pb, 0,75% Co, 0,75% Mn), unverdünnt, werden
in Beispiel 13 mit 0,2 Teilen Mischung A,
in Beispiel 14 mit 0,5 Teilen Mischung A,
in Vergleich 9 mit 0,2 Teilen Methylethylketoxim,
in Vergleich 10 mit 0,5 Teilen Methylethylketoxim
versetzt und wie vorher beschrieben geprüft (siehe Tabellen 8, 9).

Tabelle 8 (Hautbildung)

| Prüflack | Hautbildung nach Tagen (siehe Tabelle 1) | | | | | | |
|---|---|---|---|---|---|---|---|
| | 1 | 3 | 7 | 14 | 21 | 28 | 35 |
| Beispiel 11 | 0 | 0 | 0 | 1 | 2 | 3 | 3 |
| Beispiel 12 | 0 | 0 | 0 | 0 | 0 | 2 | 2 |
| Vergleich 7 | 0 | 0 | 0 | 2 | 3 | 3 | 3 |
| Vergleich 8 | 0 | 0 | 0 | 0 | 0 | 2 | 2 |
| ohne Hautverhinderungsmittel | 1 | 2 | 3 | 3 | 3 | 3 | 4 |
| Beispiel 13 | 0 | 0 | 0 | 0 | 0 | 3 | 4 |
| Beispiel 14 | 0 | 0 | 0 | 0 | 0 | 1 | 3 |
| Vergleich 9 | 0 | 0 | 0 | 0 | 0 | 3 | 4 |
| Vergleich 10 | 0 | 0 | 0 | 0 | 0 | 1 | 3 |
| ohne Hautverhinderungsmittel | 0 | 2 | 3 | 4 | 4 | 4 | 4 |

Tabelle 9 (Verfärbung)

| Pfüflack | Iodzahl des 4 Wochen alten Lackes |
|---|---|
| Beispiel 11 | 7 |
| Beispiel 12 | 7 |
| Vergleich 7 | 60 |
| Vergleich 8 | 100 |
| ohne Hauverhinderungsmittel | 7 |
| Beispiel 12 | 4 |
| Beispiel 14 | 4 |
| Vergleich 9 | 30 |
| Vergleich 10 | 50 |
| ohne Hautverhinderungsmittel | 4 |

**Patentansprüche**

1. Verwendung aliphatischer α-Hydroxyketone der allgemeinen Formel

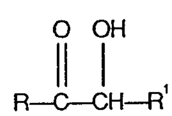

in der R Kohlenwasserstoffreste mit 1 bis 4 Kohlenstoffatomen und $R^1$ Wasserstoff oder Kohlenwasserstoffreste mit 1 bis 4 Kohlenwasserstoffatomen bedeuten, in Mengen von 0,01 bis 2 Gew.-% als Hautverhinderungsmittel in Beschichtungsmaterialien, die oxidativ trocknende Filmbildner enthalten.

2. Verwendung von α-Hydroxyketonen nach Anspruch 1 in Farben und Lacken.

3. Verwendung nach einem der Anspüche 1 bis 2, dadurch gekennzeichnet, dass die oxidativ trocknenden Filmbildner Alkydharze sind.

4. Verwendung nach einem der Ansprüche 1 bis 3, dadurch gekennzeichnet, dass die α-Hydroxyketone gemeinsam mit anderen Hautverhinderungsmitteln und/oder Antioxidantien eingesetzt werden.

## Claims

1. Use of an aliphatic α-hydroxyketone of the formula

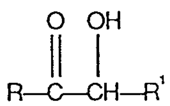

where R is a hydrocarbon radical of 1 to 4 carbon atoms and $R^1$ is hydrogen or a hydrocarbon radical of 1 to 4 carbon atoms, in amounts of from 0.01 to 2% by weight as an antiskimming agent in coating materials which contain oxidatively drying film formers.

2. Use of an α-hydroxyketone as claimed in claim 1 in paints and finishes.

3. Use as claimed in claim 1 or 2, wherein the oxidatively drying film former is an alkyd resin.

4. Use as claimed in any of claims 1 to 3, wherein the α-hydroxyketone is used together with other antiskimming agents and/or antioxidants.

## Revendications

1. Utilisation d'alpha-hydroxy-cétones aliphatiques de la formule générale

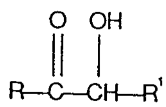
,

dans laquelle R désigne des radicaux hydrocarbonés en $C_1$ à $C_4$ et $R^1$ un atome d'hydrogène ou des radicaux hydrocarbonés en $C_1$ à $C_4$, en des proportions de 0,01 à 2% en poids comme agents anti-peaux dans des matières d'enduction contenant des composés filmogènes à séchage oxydant.

2. Utilisation d'alpha-hydroxy-cétones suivant la revendication 1 dans des peintures et vernis.

3. Utilisation suivant l'une des revendications 1 et 2, caractérisée en ce que les composés filmogènes à séchage oxydant sont des résines alkydes.

4. Utilisation suivant l'une des revendications 1 à 3, caractérisée en ce que l'emploi des alpha-hydroxy-cétones est combiné avec celui d'autres agents antipeaux et (ou) d'anti-oxygènes.